(19) Europäisches Patentamt
European Patent Office
Office européen des brevets

(11) EP 3 104 593 A1

(12) EUROPEAN PATENT APPLICATION

(43) Date of publication:
14.12.2016 Bulletin 2016/50

(51) Int Cl.:
H04N 5/335 (2006.01)          H04N 13/02 (2006.01)

(21) Application number: 15305870.6

(22) Date of filing: 08.06.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Thomson Licensing
92130 Issy-les-Moulineaux (FR)

(72) Inventors:
• DRAZIC, Valter
  35576 Cesson-Sévigné (FR)
• SEIFI, Mozhdeh
  35576 Cesson-Sévigné (FR)
• SABATER, Neus
  35576 Cesson-Sévigné (FR)

(74) Representative: Browaeys, Jean-Philippe
TECHNICOLOR
1-5, rue Jeanne d'Arc
92130 Issy-les-Moulineaux (FR)

(54) **LIGHT FIELD IMAGING DEVICE**

(57) An aspect of the invention concerns a light field imaging device comprising a micro-lens array (50) placed between a main lens (20) and a photo-sensor (30), the micro-lens array comprising a plurality of micro-lenses uniformly distributed in a plane perpendicular to a main optical axis of the main lens, each micro-lens being adapted to receive an input light ray from the main lens and to deliver an output light ray so as to form a micro-image onto a given area of the photo-sensor. The plenoptic imaging device is such that it comprises, for each micro-lens placed out of the main optical axis, optical deviating means adapted to deviate the output light ray in a direction parallel to the main optical axis.

Figure 2

## Description

## 1. TECHNICAL FIELD

The present invention relates to light-field imaging and in particular to technologies for acquiring and processing light-field data.

More specifically, the present disclosure relates to plenoptic imaging device design.

## 2. BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Conventional image capture devices render a three-dimensional scene on a two-dimensional sensor. During operation, a conventional capture device captures a two-dimensional (2-D) image representing an amount of light that reaches each point on a photosensor within the device. However, this 2-D image contains no information about the directional distribution of the light rays that reach the photosensor (may be referred to as the light-field). Depth, for example, is lost during the acquisition. Thus, a conventional capture device does not store most of the information about the light distribution from the scene.

Light-field capture devices (also referred to as "light-field data acquisition devices") have been designed to measure a four-dimensional (4D) light-field of the scene by capturing the light from different viewpoints of that scene. Thus, by measuring the amount of light traveling along each ray of light that intersects the photosensor, these devices can capture additional optical information (information about the directional distribution of the bundle of light rays) for providing new imaging applications by post-processing. The information acquired/obtained by a light-field capture device is referred to as the light-field data. Light-field capture devices are defined herein as any devices that are capable of capturing light-field data.

Light-field data processing comprises notably, but is not limited to, generating refocused images of a scene, generating perspective views of a scene, generating depth maps of a scene, generating extended depth of filed (EDOF) images, generating stereoscopic images, and/or any combination of these.

There are several types of light-field capture devices, among which:

- plenoptic devices (or plenoptic cameras), which use a micro-lens array placed between the photo-sensor and the main lens, as described for example in document US 2013/0222633;
- a camera array, where all cameras image onto a single shared image sensor or different image sensors.

The present disclosure focuses more precisely on plenoptic cameras, which are gaining a lot of popularity in the field of computational photography. Such cameras have novel post-capture processing capabilities. For example, after the image acquisition, the point of view, the focus or the depth of field can be modified. Also, from the obtained sampling of the light-field, the scene depth can be estimated from a single snapshot of the camera.

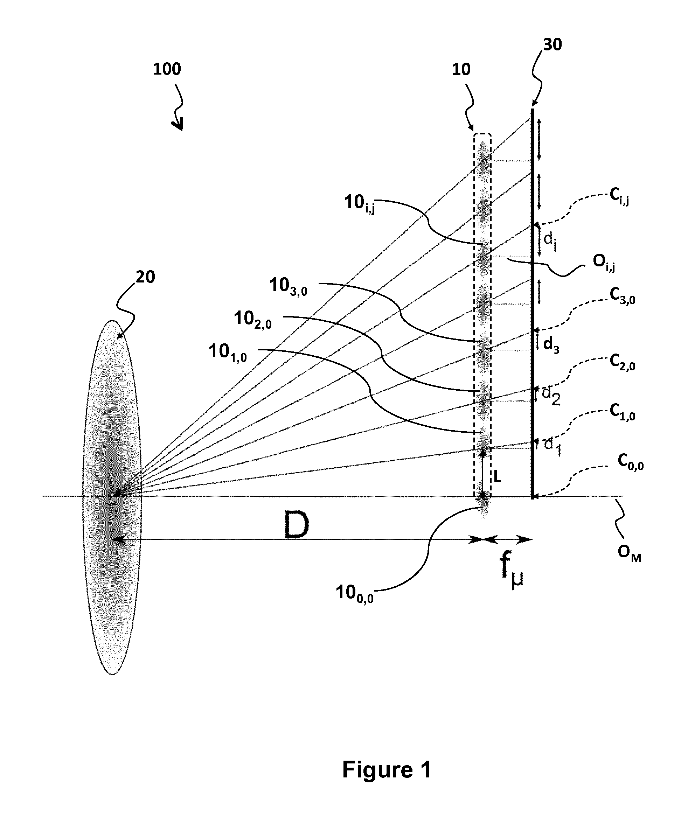

As schematically illustrated in **Figure 1,** a plenoptic camera 100 uses a micro-lens array 10 positioned in the image plane of the main lens 20 and before a photosensor 30 onto which one micro-image (also called sub-image) per micro-lens is projected. In this configuration, each micro-image depicts a certain area of the captured scene and each pixel associated with that micro-image depicts this certain area from the point of view of a certain sub-aperture location on the main lens exit pupil.

The raw image of the scene obtained as a result is the sum of all the micro-images acquired from respective portions of the photosensor. This raw image contains the angular information of the light-field. In fact, the angular information is given by the relative position of pixels in the micro-images with respect to the centre of these micro-images. Based on this raw image, the extraction of an image of the captured scene from a certain point of view, also called "de-multiplexing" in the following description, can be performed by concatenating the in-raw pixels covered by each micro-image. This process can also be seen as a data conversion from a 2D raw image into a 4D light-field.

The de-multiplexing process consists in reorganizing the pixels of the raw image in such a way that all pixels capturing the scene with a certain angle of incidence are stored in the same image, also called "view". Each view of the set of views is a projection of the scene under a different angle of view and has as many pixels as the number of micro-lenses.

For the sake of de-multiplexing the raw image, it is necessary to correlate each pixel of the micro-images with the corresponding sub-aperture location on the main lens exit pupil. Yet, to identify the pixels associated with the same perspective, it is necessary to know the centre of the micro-images formed on the photosensor.

However, the micro-lens centres are not necessarily well aligned with the pixels of the photosensor. Indeed, the micro-lens diameter does not cover an integer number of pixels.

Furthermore, because of the optical designs of the plenoptic cameras, the pitch between micro-images formed on the photosensor is not constant and changes as a function of the field angle. Indeed, as illustrated in Figure 1, although the micro-lenses of the micro-lens array 10 placed in front of the photosensor 30 are uniformly distributed (equidistant arrangement in which the pitch between two adjacent micro-lenses of the micro-lens array 10 is identical), the pitch between micro-images formed on the photosensor 30 increases linearly from the centre to the periphery of the photosensor 30. Considering $f_\mu$ the distance between the photosensor 30 and the micro-lens array 10 (i.e. focal distance of the micro-lenses), D the distance between the main lens 20 and the micro-lens array 10 (i.e. focal distance of the main lens assuming the main lens focuses at infinity) and L the inter-microlens distance, the local shift $d_i$ of the centre $c_i$ of the micro-image formed by the micro-lens $10_i$ onto the photosensor 30 with respect to the optical axis ($O_M$) of that micro-lens $10_i$ is defined by:

$$d_i = i \frac{L f_\mu}{D}$$

with $_i$ the index of the considered micro-lens (comprised between 0 and 7 in figure 1) and i a integer number equal to the index $_i$.

From this equation, it is observed that the more the micro-lens $10_i$ is placed far from the optical axis $O_M$, the more the micro-image is shifted from the optical axis ($O_i$) of the corresponding micro-lens $_i$, leading to a non-uniform distribution of the micro-images on the photosensor 30.

According to a prior art solution, the centre of each micro-image is estimated on the basis of a set of calibrated white images, each calibrated white image being associated with a given set of focusing-distance/zoom parameters. A calibrated white image is an image of an all-white scene previously taken by the plenoptic camera. However, this estimation may not correspond to the true coordinates of the micro-image centres since the local shifts are not taken into account in the estimation computation. Therefore, it is required to estimate one set of micro-image centres for every set of focusing-distance/zoom parameters of the plenoptic camera.

Thus, it would be interesting to provide a plenoptic imaging device that allows a uniform distribution of micro-images on the photosensor.

## 3. SUMMARY OF THE INVENTION

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment.

Further, when a particular feature, structure, or characteristic is described in connection with an embodiment, it is submitted that it is within the knowledge of one skilled in the art to affect such feature, structure, or characteristic in connection with other embodiments whether or not explicitly described.

A first aspect of the invention relates to a light field imaging device comprising a micro-lens array placed between a main lens and a photo-sensor, the micro-lens array comprising a plurality of micro-lenses arranged in a plane perpendicular to a main optical axis of the main lens, each micro-lens being adapted to receive an input light ray from the main lens and to deliver an output light ray so as to form a micro-image on a given area of the photo-sensor, said plenoptic imaging device comprising, for each micro-lens placed out of the main optical axis, optical deviating means adapted to deviate the output light ray in a direction parallel to the main optical axis.

A uniform distribution of micro-images projected onto the photosensor may thus be obtained by the use of optical deviating means adapted to deviate the output light ray in a direction parallel to the main optical axis. This leads to a simplified post-process of estimation of micro-image centres.

According to a particular embodiment, said optical deviating means comprise a tilted face of said micro-lens, said tilted face being tilted with respect to a normal axis to the optical axis of said micro-lens at a pair of tilt angles dependent on the relative position of said micro-lens with respect to the main optical axis.

In this particular embodiment, the use of a tilted face of the micro-lenses enables suitable correction of the angular deviation of output light rays reaching the photosensor, and therefore of micro-images formed on the photosensor). The tilted face can be either the front or the rear face of the micro-lens.

According to an alternative embodiment, said optical deviating means comprise a micro-prism with a right-angle triangular base placed in front of or behind said micro-lens, said micro-prism having a pair of tilt angles dependent on the relative position of said micro-lens with respect to the main optical axis.

Alternatively, the adjunction of a micro-prism to each micro-lens of the micro-lens array enables suitable correct angular deviation of micro-images formed on the photosensor. The micro-prism can be arranged so as to be joined to one of the faces of the micro-lens or so as to be separated by an air gap from one of faces of the micro-lens to which it is associated.

According to a particular feature, an orthogonal system defined by a first and a second axes is defined in the plane in which are distributed the micro-lenses of the micro-lens array, and wherein said pair of tilt angles is defined by:

$$\alpha_i = \tan^{-1} \frac{n \sin t}{1 + n \cos t}$$

with:

$\alpha_i$, a first tilt angle of said pair defined in a first plane containing the main optical axis and the first axis of the orthogonal system,

$n$, refractive index of said deviating means,

$t$, field angle defined as being comprised between the main optical axis and an axis passing through the main lens and said micro-lens in the first plane,

$$\alpha_j = \tan^{-1} \frac{n \sin t'}{1 + n \cos t'}$$

with:

$\alpha_j$, a second tilt angle of said pair defined in a second plane containing the main optical axis and the second axis of said orthogonal system,

$n$, refractive index of said deviating means,

$t'$, field angle defined as being comprised between the main optical axis and an axis passing through the main lens and said micro-lens in the second plane.

These equations enable the definition for each micro-lens of a suitable pair of tilt angles that ensures a parallel projection of micro-images on the photosensor, without any angular deviation, thereby leading to a uniform distribution of micro-images onto the photosensor. Thus, for a given micro-lens, each tilt angle of the pair is as a function of the relative position of this given micro-lens in the micro-lens array with respect to the main optical axis.

According to a particular feature, the plurality of micro-lenses each have a form belonging to the group comprising:

- plane-convex,
- convex-plane,
- bi-convex,
- concave-convex,
- Fresnel zone plane,

According to a particular feature, the plurality of micro-lenses is uniformly arranged in the plane perpendicular to the main optical axis of the main lens.

A further aspect of the invention relates to a micro-lens array (50) for a light field imaging device, the micro-lens array comprising a plurality of micro-lenses ($50_{i,j}$) arranged in a plane perpendicular to a main optical axis of a main lens of the light field imaging device, each micro-lens ($50_{i,j}$) being adapted to receive an input light ray from the main lens and to deliver an output light ray so as to form a micro-image on a given area of a photosensor of the light field imaging device, wherein at least one of the micro-lens ($50_{i,j}$) comprises, optical deviating means adapted to deviate the output light ray in a direction parallel to the main optical axis.

## 4. LIST OF FIGURES

Other features and advantages of embodiments of the invention shall appear from the following description, given by way of illustrative and non-exhaustive example and from the appended drawings, in which:

- **Figure 1,** previously described with reference to the prior art, presents an example of structure of a conventional plenoptic imaging device;
- **Figure 2** depicts an example of structure of a light field imaging device according to a first embodiment of the invention;
- **Figures 3A-3B** depict two examples of optical deviating means that can be implemented within the device of figure 2;
- **Figure 4** is an optical schema showing the principle for determining a tilt angle in a given plane, according to one or more embodiments of the invention;
- **Figure 5 is** a perspective view showing the principle for determining a tilt angle in space, according to at least one embodiment of the invention;
- **Figure 6** depicts an example of structure of a plenoptic imaging device according to a second embodiment of the invention; and
- **Figure 7** depicts an example of implementation of optical deviating means that can be implemented within the device of figure 6.

## 5. DETAILED DESCRIPTION

In the figures of the present document, identical elements are designated by the same numerical reference sign.

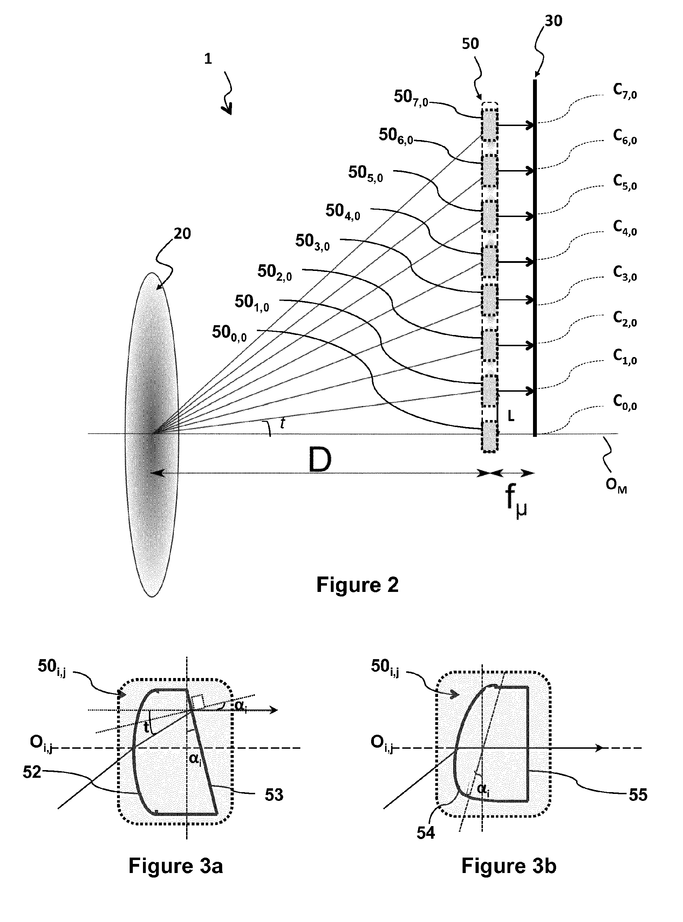

**Figure 2** depicts an example of structure of a plenoptic camera 1 according to a first embodiment of the invention.

The plenoptic camera 1 comprises a micro-lens array 50 placed in the image plane of a main lens 20 and in front of a photosensor 30 onto which one micro-image per micro-lens is projected. The photosensor 30 can be placed either in the focal plane of micro-lenses or out of the focal plane of micro-lenses.

The main lens 20 can be formed by one or more optical lenses. The photosensor 30 uses for example a CCD (Charge-Coupled Device) or CMOS (Complementary Metal Oxide Semiconductor) technology.

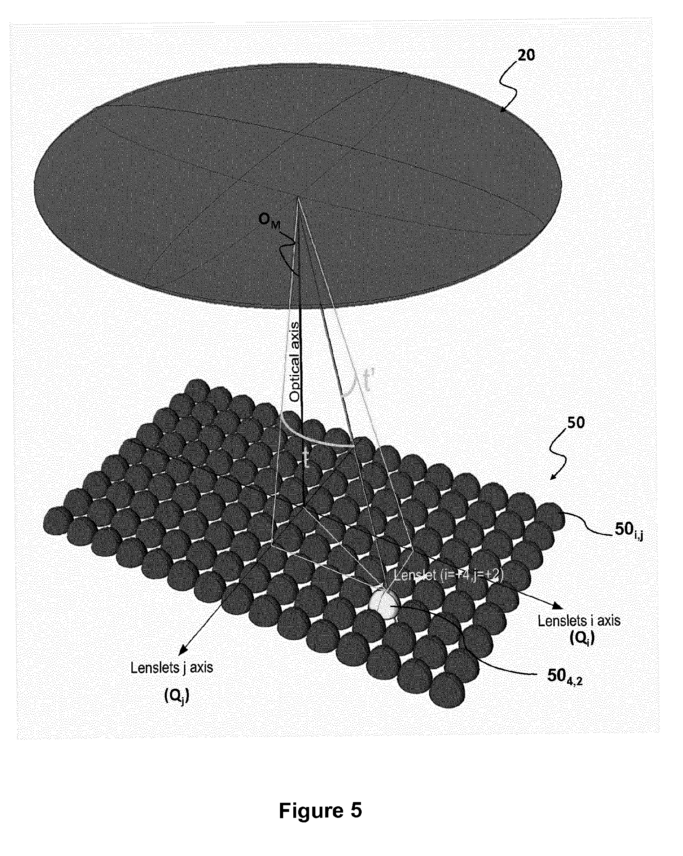

The micro-lens array 50 is a matrix of micro-lenses $50_{i,j}$ uniformly distributed in the image plane of the main lens 20. That is, the pitch between adjacent micro-lenses of the micro-lens array 50 remains identical from the center to periphery of the micro-lens array 50. The micro-lens array 50 is an N × M array comprising N rows and M columns as illustrated in figure 5. Each micro-lens $50_{i,j}$ may be identified by its respective Cartesian coordinates as (i, j), wherein i is row index ($i^{th}$ row) and j is column index ($j^{th}$ column) in the micro-lens array 50. For example, the micro-lens array 50 as shown in figure 2 includes micro-lenses at coordinates (0, 0), (1, 0), (2, 0), (3, 0), (4, 0), (5, 0), (6, 0) and (7, 0), respectively libeled $50_{0,0}$-$50_{7,0}$.

The number of micro-lenses illustrated here is just a non-limitative example for the purposes of pedagogical description. Of course, a smaller or greater number of micro-lenses can be used without departing from the scope of the invention. Furthermore, as Figure 2 is a cross-sectional view, only micro-lenses arranged over the top part of the main optical axis $O_M$, labelled $50_0$-$50_7$, are shown in the figure. Of course, a same set of micro-lenses is arranged over the lower side of the main optical axis $O_M$. The micro-lens array 50 can have a hexagonal or orthogonal arrangement or another type of arrangement without departing from the scope of the invention.

The optical axis of the main lens is hereafter denoted "main optical axis", $O_M$, whereas the optical axis of a micro-lens $50_{i,j}$ is denoted "local optical axis", $O_{i,j}$. The main optical axis, disposed horizontally, is parallel to the local optical axe $O_{i,j}$ of each micro-lens of the micro-lens array 50.

Each of the micro-lens $50_{i,j}$ is adapted to receive an input light ray from the main lens 20 and to deliver an output light ray toward the photosensor 30 so as to form a micro-image onto a given area of the photosensor 30. In the present example, the micro-lenses $50_{0,0}$ - $50_{7,0}$ form micro-images of respective centers $C_{0,0}$-$C_{7,0}$ on the photosensor 20.

In order to allow a uniform distribution of micro-images projected on the photosensor 30, each of the micro-lens $50_{i,j}$ according to embodiments of the invention has a face tilted with respect to the normal to the local optical axis $O_{i,j}$ of said micro-lenses at a pair of tilt angles $\alpha_i$ and $\alpha_j$ dependent on the relative position of said micro-lens with respect to the main optical axis $O_M$. The further away the micro-lens is from the main optical axis $O_M$, the greater is the angle of field of input light ray reaching said micro-lens, and the greater is the angular deviation of the output light ray with respect to the the local optical axis $O_{i,j}$ of said micro-lens, and the more the micro-image formed on the photosensor 30 is shifted from the local optical axis of said micro-lens, and therefore the greater the pair of tilt angles shall be to compensate for this angular deviation.

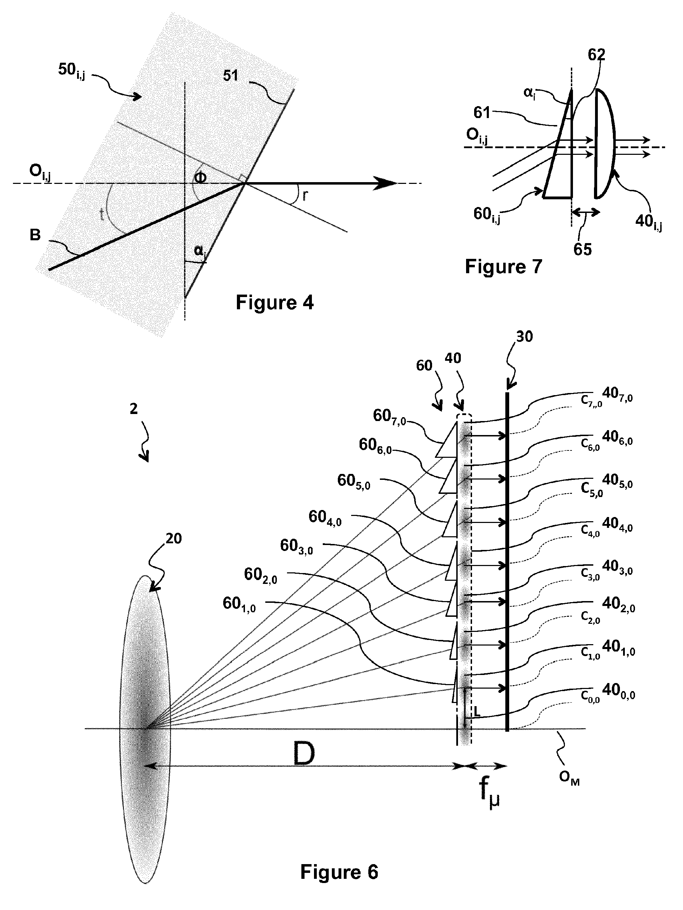

For purposes of simplification, with reference to **Figure 4** the principle of calculation of a tilt angle $\alpha_i$ is presented for a micro-lens $50_{i,0}$ which is comprised in the plane of figure 2 (i.e. a micro-lens of coordinates (i, 0)). Indeed, in that particular plane, the micro-lens face may be titled at only one tilt angle $\alpha_i$. A micro-lens $50_{i,j}$ having a plane rear face 51 is considered. A conventional micro-lens would have its flat rear face perpendicular to the local optical axis $O_{i,j}$ (represented in Figure 4 by the vertical dashed line). The principal light ray coming from the main lens 20 and propagating through the micro-lens $50_{i,j}$ is represented by the black arrow labeled "B". The micro-lens $50_{i,j}$ receives the light ray B, with a field angle *t*, with respect to the local optical axis $O_M$.

The light ray B impacts the plane rear face 51 at a tilt angle $\alpha_i$ with respect to the vertical dashed line such that, at the interface micro-lens/air, the light ray exits from the micro-lens $50_{i,j}$ parallel to the local optical axis $O_{i,j}$.

On the left hand side of the interface 51, the light ray B propagates in a given medium of the micro-lens $50_{i,j}$ with refractive index n (the micro-lens $50_i$ can be made of glass or silica for example), and on the right hand side, the light ray B changes direction and propagates in the air with refractive index equal to 1. Considering the incident angle $\phi = \alpha + t$ and the emergent angle r which is equal to $\alpha$ from geometric construction, the refraction law can be defined as follows:

$$n \sin(t - \alpha_i) = \sin \alpha_i \quad (1)$$

Since the angle of field t is such that $\tan t = \frac{iL}{D}$, with i an integer number equal to the $i^{th}$ row of the matrix of micro-lenses counted from the central micro-lens $50_{0,0}$ placed on the main optical axis $O_M$, the title angle $\alpha_i$ is defined by the following equation:

$$\alpha_i = \tan^{-1} \frac{n \sin t}{1 + n \cos t} \quad (2)$$

with:

   n, the refractive index of the micro-lens $50_i$,
   t, the half angle of field comprised between the main optical axis $O_M$ and axis passing through the main lens 20 and the micro-lens $50_i$.

In this way, each micro-lens $50_{i,0}$ of the array 50 has one of its faces tilted at a tilt angle $\alpha_i$ calculated as a function of the angle of field t of the input light ray reaching the micro-lens $50_{i,j}$, to deviate the output light ray so that it is directed in a direction parallel to the main optical axis $O_M$. The tilted face 51 forms optical deviating means according to an embodiment of the invention ensuring the centre of micro-image formed on the photosensor 30 by said micro-lens $50_{i,0}$ coincides with the local optical axis $O_{i,j}$ of said micro-lens $50_{i,0}$.

Thus, as shown in Figure 2, the centre $C_{0,0}$-$C_{7,0}$ of micro-images is aligned respectively with the local optical axis of the micro-lenses $50_{0,0}$ - $50_{7,0}$, thereby allowing a uniform distribution of micro-images projected on the photosensor 30.

It may be noted that, as the central micro-lens $50_{0,0}$ is arranged on the main optical axis $O_M$, the micro-image formed on the photosensor 30 by this central micro-lens $50_{0,0}$ is not shifted from its local axis. No deviation means of the output light ray is therefore necessary for that particular micro-lens. This is confirmed by the above equation (2), where a null angle of field implicates a null tilt angle. The micro-lens $50_{0,0}$ is therefore provided with no tilted face and is identical to a conventional micro-lens.

**Figure 3A** is a first example of convergent micro-lens $50_{i,j}$ that can be implemented in the micro-lens array 50 of figure 2. This micro-lens has, on the one hand, a convex front face 52 and, on the other hand, a plane rear face 53 which is tilted with respect to the normal to the local optical axis $O_{i,j}$ of the micro-lenses $50_{i,j}$ at a tilt angle $\alpha_i$. The micro-lens $50_{i,j}$ receives the input light ray from the main lens 20 via the convex front face 52 (interface air/glass) where the light ray is refracted. The light ray propagates through the micro-lens $50_{i,j}$ until it impacts the tilted rear face 53 (interface glass/air) where the light ray is again refracted. The light ray then outputs from the micro-lens $50_{i,j}$ parallel to its optical axis $O_{i,j}$.

**Figure 3B** is a second example of a convergent micro-lens $50_{i,j}$ that can be implemented in the micro-lens array 50 of figure 2. Contrary to figure 3A, it is the convex front face 54 which is tilted with respect to the normal to the local optical axis $O_{i,j}$ of the micro-lenses $50_i$ with a tilt angle $\alpha$. The plane rear face 55 remains perpendicular to the local optical axis $O_{i,j}$ of the micro-lens $50_{i,j}$.

Referring now to **Figure 5,** the principle of calculation of a pair of tilt angles $\alpha_i$ and $\alpha_j$ is presented for any micro-lens $50_{i,j}$ of the array 50. Indeed, as the micro-lenses array 50 is a two dimensional array, the tilted face shall be calculated taking into account not one but two tilt angles $(\alpha_i, \alpha_j)$ which depending on the relative position of the micro-lens $50_{i,j}$ in the micro-lens array with respect to the main optical axis $O_M$. Let us take the example of the micro-lens $50_{4,2}$.

Considering the orthogonal system (Q; i, j) in the plane of the micro-lens array defined by the axis $(Q_i)$ oriented towards the column axis and by the axis $(Q_j)$ oriented towards the row axis. The origin Q is placed in the micro-lens array centre through which passes the main optical axis $O_M$. We seek to calculate:

- $\alpha_i$ which is the tilt angle defined in a first plane (or "column plane") containing the main optical axis and the axis $Q_i$ of the orthogonal system (Q; i, j),
- $\alpha_j$ which is the tilt angle defined in a second plane (or "row plane") containing the main optical axis and the axis $Q_j$ of the orthogonal system (Q; i, j).

Based on the calculation principle detailed above in relation to figure 4, the following tilt angles $\alpha_i$ and $\alpha_j$ for a micro-lens $50_{i,j}$ can be deduced:

$$\alpha_i = \tan^{-1} \frac{n \sin t}{1 + n \cos t}$$

with:

n, refractive index of the micro-lens $50_{i,j}$,
t, field angle defined as being comprised between the main optical axis and the axis passing through the main lens and the micro-lens $50_{i,j}$ in the first plane, such as:

$$\tan t = \frac{iL}{D}$$

with:

L, the inter-microlens distance (i.e. the pitch between two adjacent micro-lenses),
D, the distance between the main lens 20 and the micro-lens array 50
i an integer number equal to the $i^{th}$ row of the matrix of micro-lenses counted from the central micro-lens $50_{0,0}$,
and

$$\alpha_j = \tan^{-1} \frac{n \sin t'}{1 + n \cos t'}$$

with:

n, refractive index of the micro-lens $50_{i,j}$,
t', field angle defined as being comprised between the main optical axis and the axis passing through the main lens and the micro-lens $50_{i,j}$ in the second plane, such as:

$$\tan t' = \frac{jL}{D}$$

with:

L, the inter-microlens distance (i.e. the pitch between two adjacent micro-lenses),
D, the distance between the main lens 20 and the micro-lens array 50,
j an integer number equal to the $j^{th}$ column of the matrix of micro-lenses counted from the central micro-lens $50_{0,0}$.

In addition to the examples of convergent micro-lens described here above, the present invention can be applied to other types of micro-lenses without departing from the scope of the invention, comprising:

- a convergent micro-lens having a plane rear face and a convex front face (plane-convex micro-lens);
- a convergent micro-lens having a convex front face and a plane rear face (convex-plane micro-lens);

- a convergent micro-lens having a convex front face and rear face (bi-convex micro-lens);
- a convergent micro-lens having a Fresnel zone plate on one of its face.

Furthermore, the shape of the micro-lenses in the micro-lens plane may be circular, elliptical, square or some arbitrary irregular shape. The surface shape of the micro-lenses may be spherical or aspherical. It can be envisaged that at the place of each micro-lens, a micro-lens system comprising a set of sub-micro-lenses may be placed to improve the optical properties of the imaging system.

In addition, the micro-lenses can be manufactured using a photolithography method or by molding taking into account the tilt angle $\alpha$ with which each micro-lens is associated, as a function of its location in the micro-lens array.

**Figure 6** depicts an example of structure of a plenoptic camera 2 according to a second embodiment of the invention.

The plenoptic camera 2 comprises a micro-lens array 40 placed in the image plane of the main lens 20 and in front of the photosensor 30. Contrary to the first embodiment discussed above with reference to figures 2 and 3A-3B, the angular deviation of output light rays is corrected by using an array of micro-prisms $60_{i,j}$ placed in front of the array of micro-lens $40_{i,j}$. In the second embodiment, a micro-prism $60_{i,j}$ is placed in front of each micro-lens $40_{i,j}$ of the micro-lens array 40 for correcting the output light ray and making it parallel to the main optical axis $O_M$.

For the same reasons as described above in relation to figure 2, every micro-lens of the micro-lens array 40 placed out of the main optical axis, in others words apart from the central micro-lens $40_{0,0}$, is associated with a given micro-prism (there is no shift to correct between the centre of the micro-image projected on the photosensor 30 and its local axis optical $O_{i,j}$). In figure 6, the micro-prisms $60_{1,0}$-$60_{7,0}$ are placed in front of the micro-lenses $40_{1,0}$-$40_{7,0}$ respectively.

**Figure 7** depicts an example of micro-prims $60_{i,j}$ implemented in the plenoptic camera of figure 6 according to an embodiment of the invention. This micro-prism $60_{i,j}$ has a right-triangular base with a first tilt angle $\alpha_i$ calculated as a function of the field angle t and with a second tilt angle $\alpha_j$ calculated as a function of the field angle t' in accordance with the principle described above in relation with figures 4 and 5. The micro-prims $60_i$ can be made of glass or silicate for example.

The micro-prisms $60_{i,j}$ has a tilted front face 61 receiving the input light ray from the main lens. The light ray is refracted at the interface air/glass and propagates through the micro-prisms $60_i$ until it impacts a right rear face 62. The light ray is again refracted at the interface glass/air and propagates through the air until it reaches the micro-lens $40_{i,j}$ with which it is associated. The light ray then outputs from the micro-lens $40_i$ parallel to its optical axis $O_{i,j}$.

The array of micro-prisms $60_{1,0}$-$60_{7,0}$ forms optical deviating means according to an embodiment of the invention ensuring the centre of micro-images formed on the photosensor 30 coincides with the local optical axis $O_{i,j}$ of the micro-lenses $40_{1,0}$-$40_{7,0}$.

It may be noted that the micro-prism $60_{i,j}$ in the present example is separated by an air gap 65 from the front face of the micro-lens $40_{i,j}$ to which it is associated.

A condition to satisfy however to maintain the micro-lens array 40 in the image plane of the main lens 20 and therefore to keep the conventional structural configuration between the main lens, the micro-lens array and the photosensor, is that the air gap between the micro-prism and the micro-lens should be sufficiently small in comparison with the focal distance D of the main lens 20.

Figure 6 is a non-limitative example and other configuration can be implemented without departing from the scope of the invention. It can be envisioned, for example, to place a micro-prism $60_{i,j}$ in rear of the micro-lens $40_{i,j}$. Alternately, it can be envisaged, for example, that the micro-prism $60_{i,j}$ is joined to the rear or front face of the micro-lens $40_{i,j}$ (i.e. without any air gap between the two optical elements).

Although the present disclosure has been described with reference to one or more examples, skilled persons in the art will recognize that changes may be made in form and detail without departing from the scope of the disclosure and/or the appended claims.

**Claims**

1. Plenoptic imaging device comprising a micro-lens array (50) placed between a main lens (20) and a photo-sensor (30), the micro-lens array comprising a plurality of micro-lenses ($50_{i,j}$) arranged in a plane perpendicular to a main optical axis of the main lens, each micro-lens ($50_{i,j}$) being adapted to receive an input light ray from the main lens and to deliver an output light ray so as to form a micro-image on a given area of the photo-sensor, said plenoptic imaging device comprising, for each micro-lens ($50_{i,j}$) placed out of the main optical axis, optical deviating means adapted to deviate the output light ray in a direction parallel to the main optical axis.

2. Plenoptic imaging device according to claim 1, wherein said optical deviating means comprise a tilted face of said micro-lens ($50_{i,j}$) said tilted face being tilted with respect to a normal axis to the optical axis of said micro-lens at a pair of tilt angles ($\alpha_i$, $\alpha_j$) dependent on the relative position of said micro-lens with respect to the main optical axis.

3. Plenoptic imaging device according to claim 1, wherein said optical deviating means comprise a micro-prism with a right-angle triangular base placed in front of or behind said micro-lens ($50_{i,j}$), said micro-prism having a pair of tilt angles ($\alpha_i$, $\alpha_j$) dependent on the relative position of said micro-lens with respect to the main optical axis.

**4.** Plenoptic imaging device according to any one of claims 2 and 3, wherein an orthogonal system defined by a first and a second axes is defined in the plane in which are distributed the micro-lenses of the micro-lens array, and wherein said pair of tilt angles ($\alpha_i$, $\alpha_j$) is defined by:

$$\alpha_i = \tan^{-1} \frac{n \sin t}{1 + n \cos t}$$

with:

$\alpha_i$, a first tilt angle of said pair defined in a first plane containing the main optical axis and the first axis of the orthogonal system,
n, refractive index of said deviating means,
t, field angle defined as being comprised between the main optical axis and an axis passing through the main lens and said micro-lens in the first plane,

$$\alpha_j = \tan^{-1} \frac{n \sin t'}{1 + n \cos t'}$$

with:

$\alpha_j$, a second tilt angle of said pair defined in a second plane containing the main optical axis and the second axis of said orthogonal system,
n, refractive index of said deviating means,
t', field angle defined as being comprised between the main optical axis and an axis passing through the main lens and said micro-lens in the second plane.

**5.** Plenoptic imaging device according to any one of claims 1 to 4, wherein the plurality of micro-lenses each have a form belonging to the group comprising:

- plane-convex,
- convex-plane,
- bi-convex,
- concave-convex,
- Fresnel zone plane,

**6.** Plenoptic imaging device according to any one of claims 1 to 5, wherein the plurality of micro-lenses ($50_{i,j}$) is uniformly arranged in the plane perpendicular to the main optical axis of the main lens.

**Figure 1**

**Figure 2**

**Figure 3a**

**Figure 3b**

**Figure 5**

Figure 4

Figure 7

Figure 6

Europäisches
Patentamt

European
Patent Office

Office européen
des brevets

# EUROPEAN SEARCH REPORT

Application Number

EP 15 30 5870

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2013 200059 A1 (FRAUNHOFER GES ZUR FÖRDERUNG DER ANGEWANDTEN FORSCHUNG E V [DE]) 10 July 2014 (2014-07-10) | 1,3-6 | INV. H04N5/335 H04N13/02 |
| Y | * abstract; figures 1, 3, 5a, 5b * * paragraph [0068] - paragraph [0070] * ----- | 2 | |
| Y | WO 2013/169671 A1 (LYTRO INC [US]) 14 November 2013 (2013-11-14) | 2 | |
| A | * paragraph [0153] - paragraph [0156] * ----- | 1,3-6 | |

TECHNICAL FIELDS
SEARCHED        (IPC)

H04N

The present search report has been drawn up for all claims

| Place of search | Date of completion of the search | Examiner |
|---|---|---|
| Munich | 11 November 2015 | Prange, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 30 5870

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2015

| Patent document cited in search report | Publication date | Patent family member(s) | Publication date |
|---|---|---|---|
| DE 102013200059 A1 | 10-07-2014 | NONE | |
| WO 2013169671 A1 | 14-11-2013 | CN 104303493 A<br>EP 2820838 A1<br>HK 1201391 A1<br>JP 2015520992 A<br>US 2014146201 A1<br>WO 2013169671 A1 | 21-01-2015<br>07-01-2015<br>28-08-2015<br>23-07-2015<br>29-05-2014<br>14-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130222633 A